(19) **Europäisches Patentamt / European Patent Office / Office européen des brevets**

(11) **EP 4 339 854 A1**

(12) # EUROPEAN PATENT APPLICATION
published in accordance with Art. 153(4) EPC

(43) Date of publication:
**20.03.2024 Bulletin 2024/12**

(21) Application number: **21945939.3**

(22) Date of filing: **15.06.2021**

(51) International Patent Classification (IPC):
**G06Q 10/06** $^{(2023.01)}$   **G06Q 50/02** $^{(2024.01)}$

(52) Cooperative Patent Classification (CPC):
**G06Q 10/06; G06Q 50/02**

(86) International application number:
**PCT/JP2021/022667**

(87) International publication number:
**WO 2022/264259 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: HONDA MOTOR CO., LTD.
**Minato-ku**
**Tokyo 107-8556 (JP)**

(72) Inventors:
• **HIRAKAWA, Megumi**
**Tokyo 107-8556 (JP)**
• **SAKAGUCHI, Sota**
**Tokyo 107-8556 (JP)**
• **MURATA, Satoshi**
**Tokyo 107-8556 (JP)**
• **NAMIKI, Shohei**
**Tokyo 107-8556 (JP)**
• **HISADA, Ryota**
**Tokyo 107-8556 (JP)**
• **KIMATA, Ryuichi**
**Tokyo 107-8556 (JP)**

(74) Representative: **Beder, Jens**
**Mitscherlich PartmbB**
**Patent- und Rechtsanwälte**
**Karlstraße 7**
**80333 München (DE)**

(54) **INFORMATION PROCESSING DEVICE, TERMINAL DEVICE, INFORMATION PROCESSING METHOD, AND PROGRAM**

(57)   The storage means stores history information in which area information regarding a past work area and time information regarding a work time in the past work area are associated with each other. The acquisition means acquires area information regarding a current work area. The identification means identifies a degree of association between the area information acquired by the acquisition means and the history information stored in the storage means. The output means outputs information included in the history information with priority according to the degree of association identified by the identification means.

**FIG. 4**

EP 4 339 854 A1

**Description**

TECHNICAL FIELD

The present invention relates to an information processing device, a terminal device, an information processing method, and a program.

BACKGROUND ART

In parks, gardens, and the like, work such as lawn mowing or grass mowing may be performed by a landscaper. The landscaper performs the work using a device such as a lawn mower (for example, Patent Literature 1), a trimmer, or a blower, or manually.

CITATION LIST

PATENT LITERATURE

PTL1: Japanese Patent Laid-Open No. 2009-118823

SUMMARY OF INVENTION

TECHNICAL PROBLEM

When the landscaper receives a request for work from a requester, the landscaper may observe an area of a work target to predict a work time, and may estimate a work cost or the like on the basis of the predicted work time. The work time may be predicted on the basis of intuition, experience, or the like of the landscaper, but the prediction accuracy may not be stable.
The present invention provides technology for presenting information that enables a user to predict a work time.

SOLUTION TO PROBLEM

According to one aspect of the present invention, there is provided an information processing device, characterized by comprising:

storage means for storing history information in which area information regarding a past work area and time information regarding a work time in the past work area are associated with each other;
acquisition means for acquiring area information regarding a current work area;
identification means for identifying a degree of association between the area information acquired by the acquisition means and the history information stored in the storage means; and
output means for outputting information included in the history information with priority according to the degree of association identified by the identification means.

ADVANTAGEOUS EFFECTS OF INVENTION

According to the present invention, it is possible to present information that enables a user to predict a work time.

BRIEF DESCRIPTION OF DRAWINGS

The accompanying drawings, which are incorporated in and constitute a part of the specification, illustrate embodiments of the invention and, together with the description, serve to explain principles of the invention.

FIG. 1 is a diagram illustrating an outline of a work time prediction system according to an embodiment.
FIG. 2 is a diagram illustrating an example of a work area to be a prediction target of a work time.
FIG. 3 is a diagram illustrating an example of data stored in a storage unit.
FIG. 4 is a sequence diagram illustrating a control example of a server device and a terminal device.
FIG. 5 is a diagram illustrating a screen example of a display unit at the time of receiving input of area information.
FIG. 6 is a diagram illustrating a screen example of a display unit.
FIG. 7 is a flowchart illustrating a specific example of processing in FIG. 4.

FIG. 8 is a diagram illustrating past information regarding a lawn.

FIG. 9 is a diagram illustrating an outline of a work time prediction system according to an embodiment.

FIG. 10 is a sequence diagram illustrating a control example of a server device and a terminal device.

FIG. 11 is a diagram illustrating an example of a screen displayed on a display unit.

FIG. 12 is a diagram illustrating a screen example of a display unit.

DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

<First Embodiment>

<Outline of System>

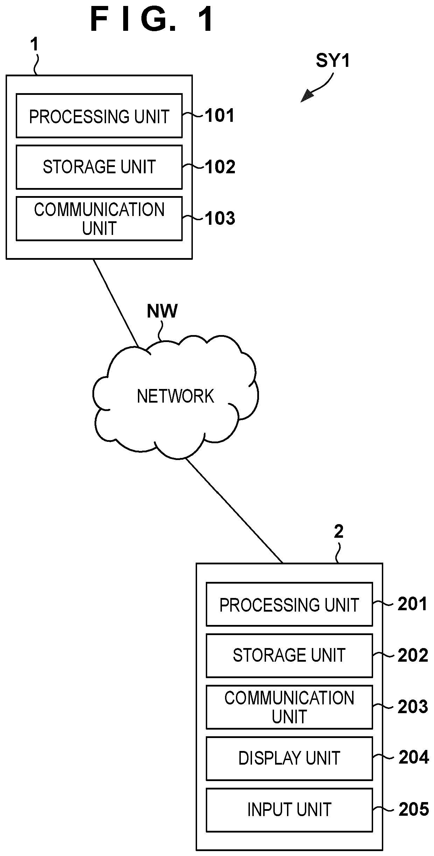

FIG. 1 is a diagram illustrating an outline of a system SY1 according to an embodiment. The system SY1 is a system that provides information regarding past work for predicting a time required for work when a landscaper or the like performs work such as lawn mowing or grass mowing in a park, a garden, or the like. The system SY1 includes a server device 1 and a terminal device 2. The server device 1 and the terminal device 2 are communicably provided via a network NW such as the Internet.

The server device 1 functions as an information processing device that outputs information regarding past work for predicting a time required for work. The server device 1 includes a processing unit 101, a storage unit 102, and a communication unit 103. The processing unit 101, the storage unit 102, and the communication unit 103 are connected by a bus (not illustrated). The processing unit 101 is a processor represented by a CPU, and executes a program stored in the storage unit 102 to implement various functions related to the server device 1. The storage unit 102 is, for example, a read only memory (ROM), a random access memory (RAM), a hard disk drive (HDD), or a solid state drive (SSD), and stores various types of data in addition to the program executed by the processing unit 101. The communication unit 103 is a communication interface with an external device.

The terminal device 2 is, for example, a terminal operated by a user who performs work. The terminal device 2 may be, for example, a tablet, a smartphone, a PC, or the like. The terminal device 2 includes a processing unit 201, a storage unit 202, a communication unit 203, a display unit 204, and an input unit 205. The processing unit 201, the storage unit 202, the communication unit 203, the display unit 204, and the input unit 205 are connected by a bus (not illustrated). The processing unit 201 is a processor represented by a CPU, and executes a program stored in the storage unit 202 to implement various functions related to the terminal device 2. The storage unit 202 is, for example, a read only memory (ROM), a random access memory (RAM), a hard disk drive (HDD), or a solid state drive (SSD), and stores various types of data in addition to the program executed by the processing unit 201. The communication unit 203 is a communication interface with an external device.

The display unit 204 is a user interface that displays various types of information. For example, the display unit 204 may be a liquid crystal display, an organic EL panel, or the like. Further, the input unit 205 is a user interface that receives input from the user. For example, the input unit 205 may be a touch panel, a pointing device such as a mouse, a physical key, or the like.

Although one terminal device 2 is illustrated in FIG. 1, two or more terminal devices 2 may be configured to be able to communicate with the server device 1. Further, the server device 1 may be divided into two or more elements as necessary. That is, the server device 1 as a work time prediction device may be configured by combining a plurality of devices. In addition, at least a part of the functions implemented by the server device 1 may be implemented by a known semiconductor device such as a programmable logic device (PLD) or an application specific integrated circuit (ASIC).

<Work area>

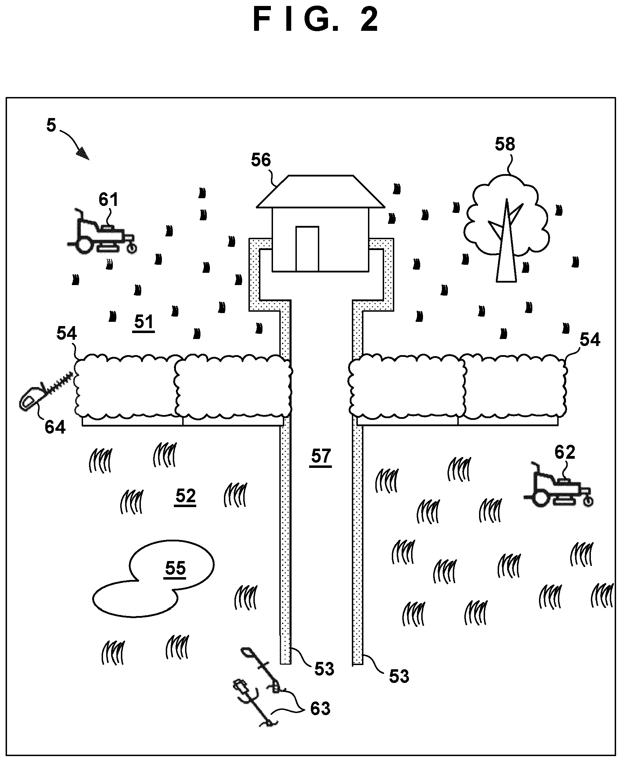

FIG. 2 is a diagram illustrating an example of a work area 5 to be a prediction target of a work time. The work area 5 according to the present embodiment is divided into a lawn area 51, a grass area 52, a handheld area 53, and a hedge area 54 according to content of the work by the landscaper.

The lawn area 51 is an area where a lawn is planted. For example, the landscaper performs lawn mowing work using a ride-on lawn mower 61, a walking lawn mower (not illustrated), or the like. Alternatively, the lawn mowing work may be performed by an autonomous robot lawn mower or the like. In the present embodiment, a tree 58 is planted in the lawn area 51, and the landscaper performs the work while avoiding the tree 58 and its surroundings. That is, the tree 58 and its surrounding region are non-entry regions for a working machine.

The grass area 52 is an area where grass is growing. For example, the landscaper performs grass mowing work using a ride-on grass mower 62, a walking grass mower, or the like. Alternatively, the grass mowing work may be performed by an autonomous robot grass mower or the like. In the present embodiment, a pond 55 is arranged in the grass area 52, and the landscaper performs the work while avoiding the pond 55 and its surroundings.

The handheld area 53 is an area where the landscaper performs manual work. In the present embodiment, since the work by the ride-on lawn mower 61, the ride-on grass mower 62, or the like is difficult in a portion adjacent to a building 56 or a passage 57, the landscaper manually performs the work using a handheld working machine 63 such as an edger.

The hedge area 54 is an area where a hedge is planted. For example, the landscaper adjusts an outer shape of the hedge using a trimmer 64.

Note that the method of dividing the work area 5 is expedient according to the work content, and can be appropriately set.

<Data Configuration>

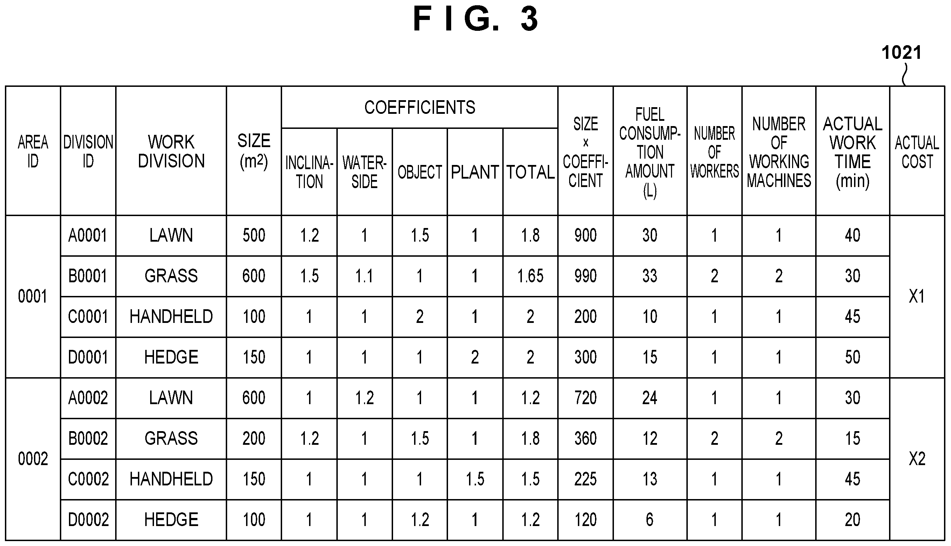

FIG. 3 is a diagram illustrating an example of data stored in the storage unit 102. In the present embodiment, a work history database 1021 is constructed in the storage unit 102, and history information regarding past works is stored therein. In the present embodiment, the history information includes information in which area information regarding past work areas is associated with time information regarding past work times. In addition, the history information includes information regarding estimations of past work costs. In the present embodiment, the storage unit 102 manages and stores the history information for each work area using an area ID.

The area information regarding the past work area includes a work division, a size of the work area, and a coefficient. The work division is obtained by dividing regions in the work area according to the work performed by the landscaper. In FIG. 3, the lawn, the grass, the handheld, and the hedge are illustrated as work divisions in accordance with the work area 5 of FIG. 2.

The size of the work area is indicated for each work division. For the lawn, the grass, and the handheld, respective areas are indicated. In addition, a surface area of a portion to be a work target is indicated for the hedge. Note that the size of the hedge may be indicated by, for example, an area of a region where the hedge is planted. However, a work amount can be more appropriately grasped by representing the size of the hedge by the surface area.

The coefficient is a value multiplied by the size of the work area. In the present embodiment, each coefficient is set to a value between 1 and 2. The coefficient is used to consider not only the size of the work area but also easiness of work in the work area in identifying a degree of association of the work area to be described later. For example, when there is an inclination in the work area or when it is necessary to perform work while avoiding a waterside of the work area, the work may take more time due to the need to reduce the movement speed of the working machine or the like. Therefore, when an element that causes an increase in work time is present in the work area, a numerical value obtained by multiplying the size of the work area by a predetermined coefficient is used to identify the degree of association of the work area, so that the degree of association of the work area can be identified in consideration of easiness of work in the work area. That is, the value of size × coefficient here can be said to be information used to identify the degree of association of the work area in consideration of the easiness of work in the work area.

In the present embodiment, the area information regarding the past work area includes coefficients regarding an inclination, a waterside, an object, and a plant. That is, in a case where there is an inclination in the work area, in a case where there is a waterside, in a case where there is an object that needs to be avoided, and the like, it is considered that more time is required for work. Therefore, these factors are set as coefficients. In addition, depending on the type of plant to be cut in the work area, it is considered that more time is required for work due to reasons such as hardness and difficulty in cutting. Therefore, the type of plant is also set as a coefficient. Note that a target for which the coefficient is set is not limited to these, and can be set as appropriate.

In the present embodiment, workability information regarding the easiness of work in the work area includes coefficients related to an inclination, a waterside, an object, and a plant, but the workability information may be information other than the coefficients. For example, the workability information may be various types of information regarding workability, such as an average obliquity of the work area, an area of the waterside or the object, and an outer peripheral length of the waterside or the object. Further, for example, the workability information may be information regarding weather such as sunlight, sunlight hours, temperature, humidity, and precipitation in the work area. For example, even in the same plant, since a degree of growth varies depending on the sunlight, the precipitation, and the like, these may affect the work time. Further, for example, when it rains on the day of work or the day before work, the mud in the work area or the like may affect the work time. Therefore, the coefficients described above may be set for these pieces of information.

The time information regarding the past work time includes an actual work time, the number of workers, and the number of working machines. Further, the information regarding the estimation of the work cost includes a fuel consumption amount of the working machine and an actual cost. In the present embodiment, the time information regarding the past work time includes information regarding the work time, information regarding the number of workers, and information regarding the number of working machines for each work division.

<Control Example>

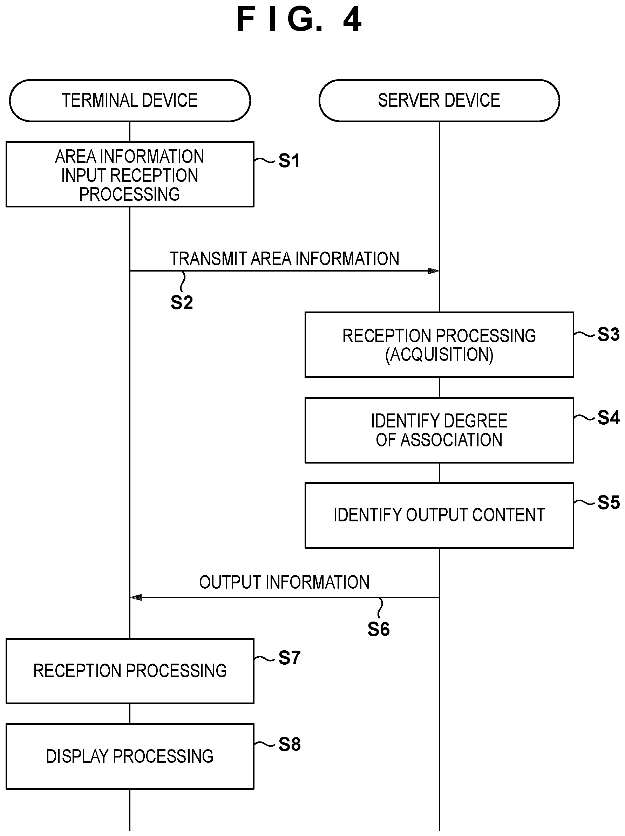

FIG. 4 is a sequence diagram illustrating a control example of the server device 1 and the terminal device 2. For example, this sequence is executed when the landscaper (user) outputs information for predicting the work time of the work area and estimating the cost. Note that, in the following description, each step is simply denoted by S 1 or the like.

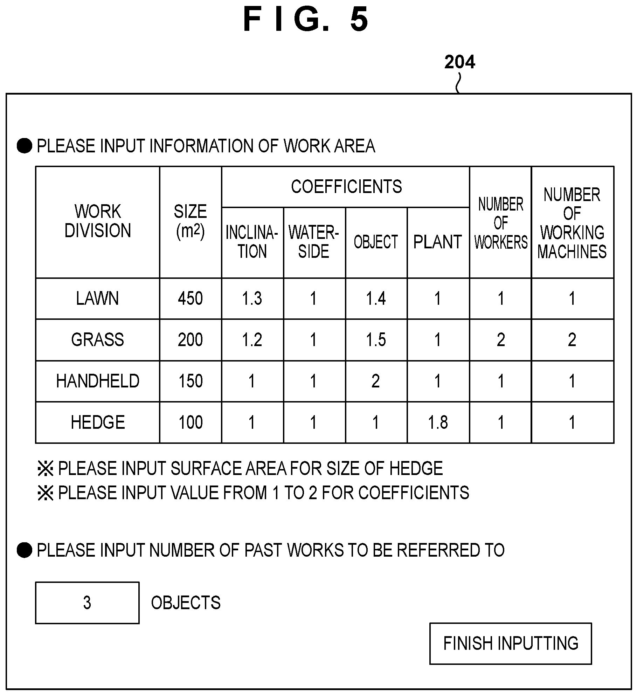

In S 1, the processing unit 201 executes input reception processing of area information regarding a current work area. The processing unit 201 instructs the input unit 205 to receive the user's input. Here, FIG. 5 is a diagram illustrating a screen example of the display unit 204 at the time of receiving the input of the area information. In the present embodiment, the input unit 205 receives, as the area information, input of size information regarding the size of the work area and workability information regarding easiness of work in the work area. Here, the "size" corresponds to the size information, and the "coefficient" corresponds to the workability information regarding the easiness of work.

Further, in the present embodiment, the input unit 205 can receive input of division information regarding a division of work as the area information. Then, the input unit 205 receives input of the area as the size information and the coefficient as the workability information for each division of each work. The work division may include at least one of lawn work, grass work, manual work, and hedge work. In the present embodiment, the input unit 205 receives a surface area of a work target portion as the size information for the hedge.

Further, in the present embodiment, the input unit 205 receives the number of workers, the number of working machines, and the number of past works to be referred to for each work division as information for displaying associated past work results.

Further, in the present embodiment, the workability information to be input includes information regarding the inclination of the work area, the non-entry region of the working machine in the work area, the object disposed in the work area, and the type of the plant in the work area. Specifically, the input unit 205 is configured to be able to receive coefficients of respective items. Note that the items of the coefficients to be input are not limited, and may include at least one of the exemplified items, or may include items other than the exemplified items.

In S2, the communication unit 203 transmits the area information acquired in S1 to the server device 1 on the basis of a command from the processing unit 201.

In S3, the processing unit 101 of the server device 1 executes reception processing of the area information transmitted from the terminal device 2. The processing unit 101 receives the area information transmitted from the terminal device 2 by the communication unit 103. That is, the processing unit 101 acquires area information regarding the current work area by receiving information from the terminal device 2. Moreover, the processing unit 101 acquires information input by the user to the terminal device 2 as the area information.

In S4, the processing unit 101 identifies a degree of association. The processing unit 101 identifies a degree of association between the area information acquired in S3 and the history information in which the area information regarding the past work area and the time information regarding the work time in the past work area are associated with each other. Details of this step will be described later. In addition, the degree of association here may be an index that can indicate a degree of association between the area information of the current work area and the history information of the past work area. For example, in an example to be described later, a difference between values of size $\times$ coefficient between the current work area and the past work area can be used as the degree of association.

In S5, the processing unit 101 identifies output content. Here, the processing unit 101 identifies the output content such that the information included in the history information is output with priority according to the degree of association identified in S4. For example, the processing unit 101 identifies the output content on the basis of the degree of association identified in S4 and the information such as the number of works to be referred to received in S 1. For example, in the present embodiment, since the number of works to be referred to received is three, the processing unit 101 identifies three pieces of data as the output content in descending order of the degree of association for each work division. That is, the processing unit 101 may identify information included in the predetermined number of pieces of history information having a high degree of association with the area information of the current work area among the plurality of pieces of history information of the work areas as the output content. In the present embodiment, the information regarding the prescribed number of past work areas is identified as the output content, but the method of identifying the output content is not limited thereto. For example, a threshold value may be set for the degree of association, and all data having the degree of association equal to or more than the threshold value may be included in the output content. For example, as will be described later, in a case where the degree of association is identified by the value of the size of the work area × the coefficient, information regarding the past work area in which a difference in value from the current work area is within a predetermined value or within a predetermined ratio may be included in the output content.

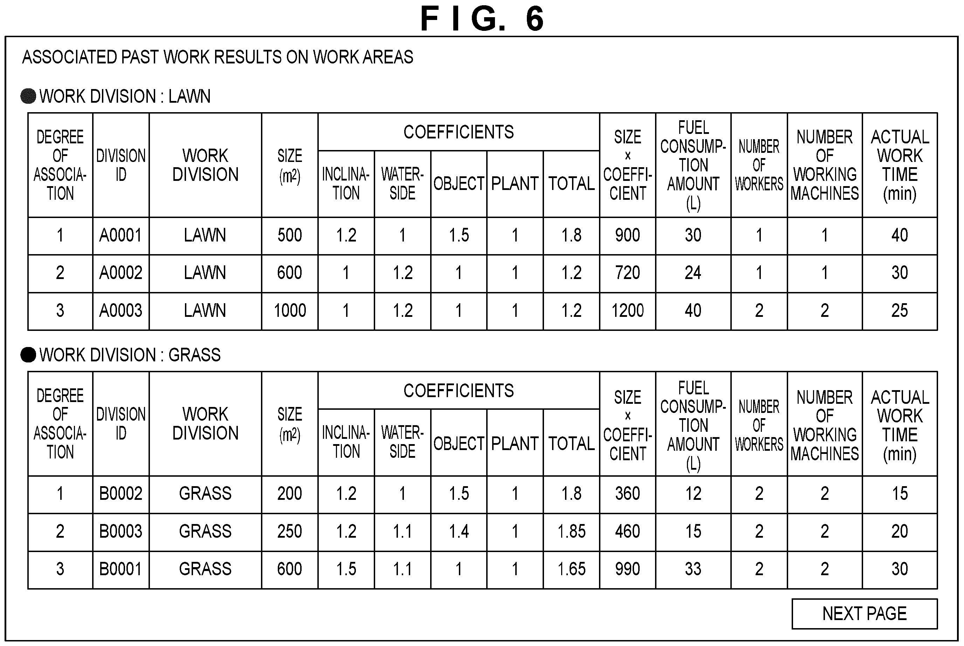

In S6, the communication unit 103 outputs information on the basis of a command from the processing unit 101. That is, the processing unit 101 outputs the content identified in S5 to the terminal device 2 via the communication unit 103. Note that, in the present embodiment, the processing unit 101 outputs the content with priority according to the degree of association for each work division. More specifically, the processing unit 101 outputs a plurality of (three in this example) work results in the past work area having a high degree of association with the current work for each work division (see FIG. 6).

In S7, the processing unit 201 of the terminal device 2 executes reception processing of the information transmitted from the server device 1. The processing unit 201 receives the information transmitted from the server device 1 by the communication unit 203.

In S8, the processing unit 201 executes processing of displaying the received information. The processing unit 201 instructs the display unit 204 to display the information received in S7. FIG. 6 is a diagram illustrating a screen example of the display unit 204 regarding an output result of the server device 1. The display unit 204 displays three work results in the past work area having a high degree of association with the current work for each work division.

Specifically, FIG. 6 illustrates work results in three past work areas having a high degree of association with the current work area for the lawn and the grass among the work divisions. For example, when the input unit 205 receives input of a "next page" button by the user, the processing unit 101 may cause the display unit 204 to display the work results in the three past work areas having a high degree of association with the current work area for the handheld and the hedge.

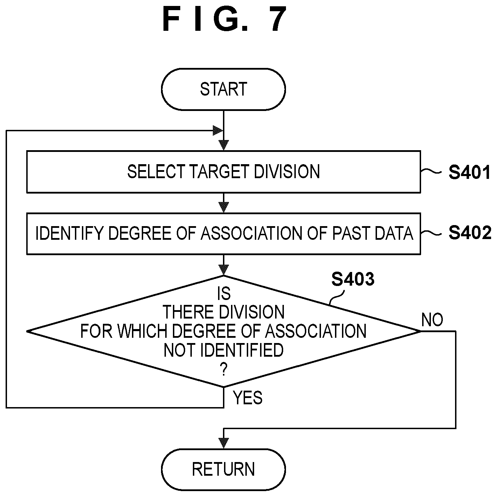

FIG. 7 is a flowchart illustrating a specific example of step S4.

In S401, the processing unit 101 selects a prediction target division of the work time. For example, the processing unit 101 selects the lawn as the target division.

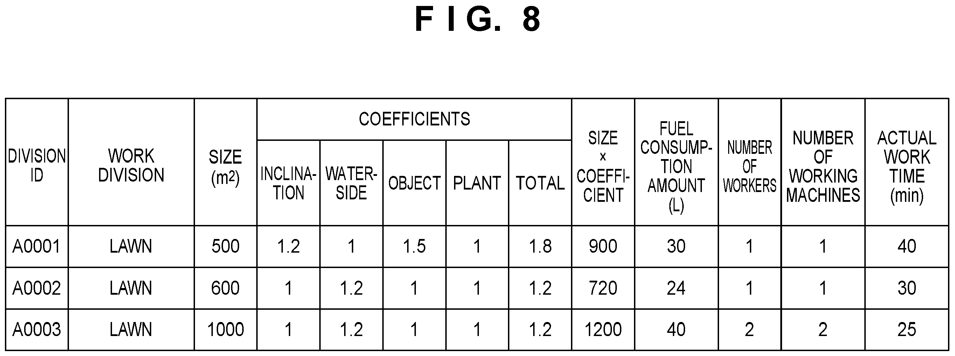

In S402, the processing unit 101 identifies a degree of association of past data. FIG. 8 is a diagram illustrating past information regarding the lawn. Here, in the present embodiment, the history information is managed for each work area by the work history database 1021, but it is assumed that data of a specific work division (the lawn in the example of FIG. 8) can be extracted and used as necessary.

For example, the processing unit 101 identifies a degree of association with the current work area for each piece of data having division IDs of A0001 to A0003. A method of identifying the degree of association can be set as appropriate. For example, the processing unit 101 may identify the degree of association on the basis of the closeness between the past work area size × coefficient value and the current work area size × coefficient value. In addition, the processing unit 101 may determine that the closer these values are, the higher the degree of association with the current work area is. In the present embodiment, the value of the size of the lawn in the current work area × the coefficient is

$$450 \ (\text{size}) \times 1.3 \ (\text{inclination coefficient}) \times 1.4 \ (\text{object coefficient}) = 819$$

(see FIG. 5). In addition, the value of the size of the work area with the division ID of A0001 × the coefficient is 900, the value of the size of the work area with the division ID of A0002 × the coefficient is 720, and the value of the size of the work area with the division ID of A0003 × the coefficient is 1200. Therefore, the processing unit 101 may determine that the degree of association with the current work area is high in the order of A0001, A0002, and A0003.

Further, for example, the processing unit 101 may identify the degree of association on the basis of the value of the coefficient of the past work area. For example, the processing unit 101 may use, as an index of the degree of association, a sum of absolute values of differences from the respective coefficients of the current work area, a sum of squares of the differences, or the like for the respective pieces of data with the division IDs of A0001 to A0003. Further, the processing unit 101 may determine that the degree of association with the current work area is high in ascending order of these values.

In S403, the processing unit 101 confirms whether or not there is a division for which the degree of association is not identified. When there is a division for which the degree of association is not identified, the processing unit returns to S401, and when there is no division, the processing unit ends the present flowchart.

As described above, according to the present embodiment, since the information included in the history information is output with the priority according to the degree of association with the area information of the current work area, it is possible to present information for the user to predict the work time. Therefore, since the user can predict the work time with reference to the history information in the past work area associated with the current work area, the prediction accuracy of the work time is improved as a result.

<Second Embodiment>

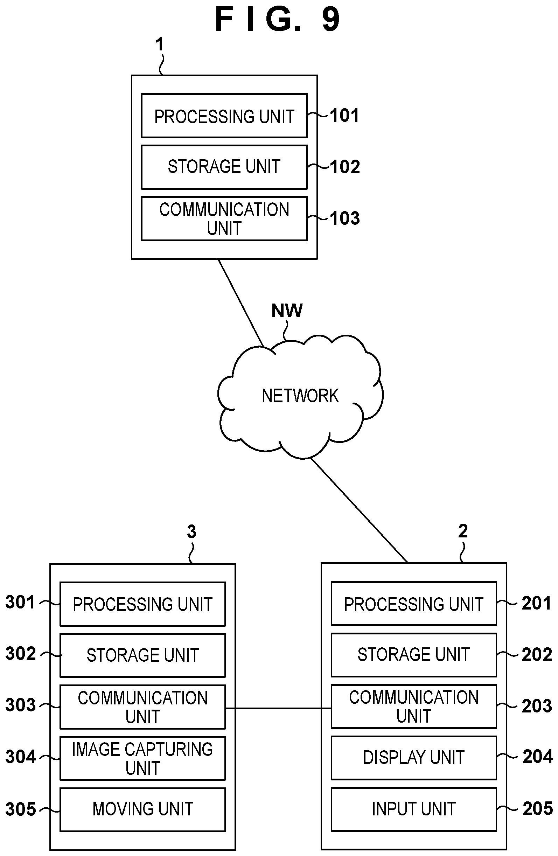

FIG. 9 is a diagram illustrating an outline of a system SY2 according to an embodiment. In the second embodiment, the system SY2 includes an image capturing device 3 that captures an image of a work area. Hereinafter, configurations similar to those in the first embodiment are denoted by similar reference numerals, and description thereof will be omitted.

The image capturing device 3 is a device for capturing a captured image as information regarding a current work area. The image capturing device 3 may be, for example, a flying body such as a drone, or may be configured to be able to capture an image of the work area from above. Further, for example, the image capturing device 3 may be a moving body capable of traveling on the work area. The moving body may be, for example, a working machine such as an autonomous lawn mower, and a camera for peripheral detection provided in the working machine may function as an image capturing unit 304 described later. Further, for example, the image capturing device 3 may be a monitoring camera or the like. Note that the image capturing device 3 may be possessed by a landscaper, or may be possessed by a manager or the like of the work area. Alternatively, the image capturing device 3 may be a portable terminal such as a digital camera or a smartphone possessed by a general user such as a user in the work area. The image capturing device 3 includes a processing unit 301, a storage unit 302, a communication unit 303, an image capturing unit 304, and a moving unit 305. The processing unit 301, the storage unit 302, the communication unit 303, the image capturing unit 304, and the moving unit 305 are connected by a bus (not illustrated).

The processing unit 301 is a processor represented by a CPU, and executes a program stored in the storage unit 302 to implement various functions related to the image capturing device 3. The storage unit 302 is, for example, a read only memory (ROM), a random access memory (RAM), a hard disk drive (HDD), or a solid state drive (SSD), and stores various types of data in addition to the program executed by the processing unit 301. The communication unit 303 is a communication interface with an external device. The image capturing unit 304 is, for example, a camera, and is configured to be capable of capturing a still image or a moving image. The moving unit 305 moves the image capturing device 3. For example, in a case where the image capturing device 3 is a drone, the moving unit 305 can include a propeller, a motor that drives the propeller, and the like. When the image capturing device 3 is a portable terminal such as a monitoring camera or a digital camera installed in the work area, the moving unit 305 is omitted.

In the present embodiment, the image capturing device 3 can be connected to a terminal device 2 in a wired or wireless manner by the communication unit 303. For example, an image of the work area captured by the image capturing unit 304 is transmitted to the terminal device 2 by the communication unit 303. As a communication method here, known technology can be appropriately adopted, but the terminal device 2 and the image capturing device 3 may be communicable by, for example, wireless fidelity (Wi-Fi), Bluetooth (registered trademark), or the like. Alternatively, the image capturing device 3 may be able to communicate with the server device 1 or the terminal device 2 via a network NW such as the Internet. Note that, although one image capturing device 3 is illustrated in FIG. 9, two or more image capturing devices 3 may be able to communicate with the terminal device 2.

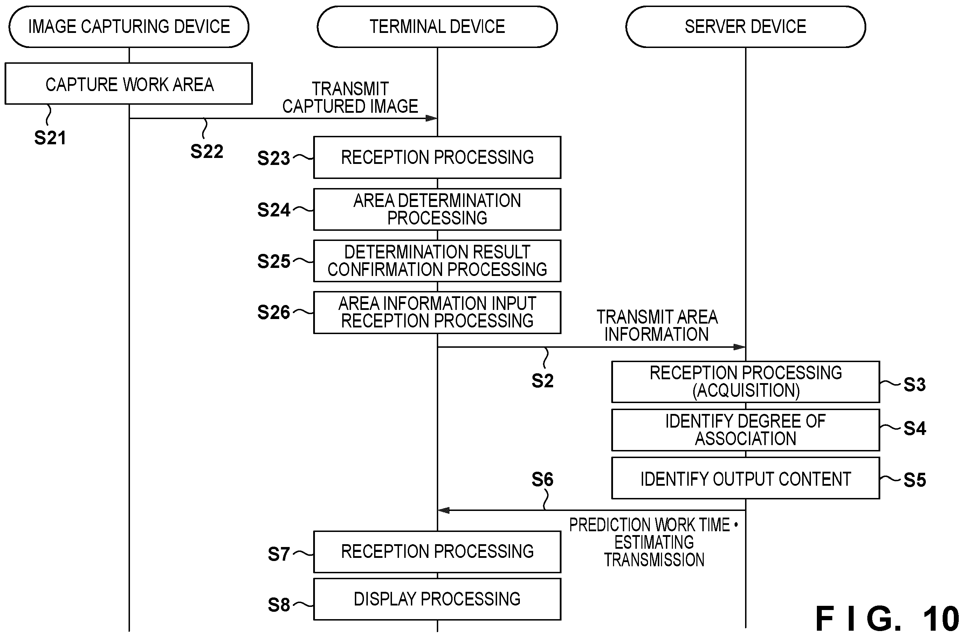

FIG. 10 is a sequence diagram illustrating a control example of the server device 1, the terminal device 2, and the image capturing device 3.

In S21, the processing unit 301 controls the image capturing unit 304 and the moving unit 305 to capture an image of the work area. Note that the captured image obtained in this step may be a still image or a moving image. For example, in a case where the image capturing device 3 is a drone, an autonomous lawn mower, or the like, the image capturing device 3 starts image capturing of the work area on the basis of reception of an area image capturing instruction or the like from the terminal device 2.

In S22, the communication unit 303 transmits the captured image acquired in S21 to the terminal device 2 on the basis of a command from the processing unit 301.

Note that, although the captured image is transmitted from the image capturing device 3 to the terminal device 2 in the present embodiment, the captured image may be transmitted from the image capturing device 3 to the server device 1. In this case, when the server device 1 receives a transmission request of the captured image from the terminal device 2, the server device 1 may transmit the captured image to the terminal device 2. That is, it is also possible to adopt a configuration in which the captured image of the image capturing device 3 is accumulated in the server device 1, and the terminal device 2 acquires the accumulated captured image from the server device 1 as necessary. Note that the server device 1 may transmit the captured image received from the image capturing device 3 to the terminal device 2 as it is, or may transmit the captured image to the terminal device 2 after the terminal device 2 extracts the captured image required for subsequent processing or performs predetermined image processing.

In S23, the processing unit 201 of the terminal device 2 executes processing of receiving the captured image transmitted from the image capturing device 3. The processing unit 201 receives the captured image transmitted from the image capturing device 3 by the communication unit 203.

In S24, the processing unit 201 executes area determination processing using the received captured image. This processing is processing for dividing the image-captured work area into work divisions. Known image processing technology can be appropriately adopted for the division of the work area.

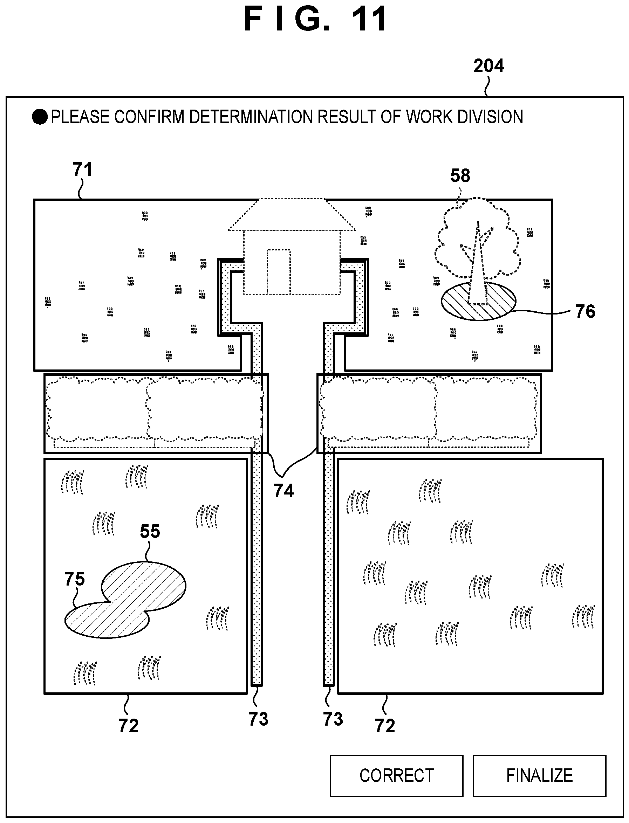

In S25, the processing unit 201 executes processing for confirming a determination result in S24. FIG. 11 is a diagram illustrating an example of a screen displayed on the display unit 204 in the determination result confirmation processing. In FIG. 11, the work area is divided into a lawn determination area 71 determined to be a lawn, a grass determination area 72 determined to be a grass, a handheld determination area 73 determined to be handheld, and a hedge determination area 74 determined to be a hedge, on the basis of the captured image. Further, a tree 58 and its surroundings in the lawn determination area 71 are determined as a non-entry region 76 of the working machine of the working machine. Further, a pond 55 in the grass determination area 72 is determined as a waterside 75. On the basis of the confirmation screen displayed on the display unit 204, when the determination of the work area is appropriately performed, the user presses a confirmation button by the input unit 205. On the other hand, when the determination of the work area is not appropriately performed, a correction button is pressed by the input unit 205. When the correction button is pressed, the processing unit 201 may perform the area determination processing of S24 again. Alternatively, each determination region may be configured to be correctable by the user on the screen of the display unit 204.

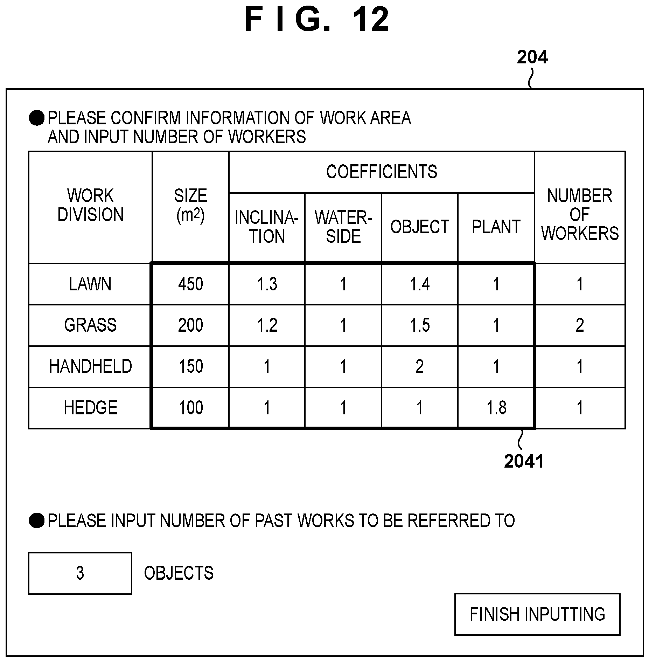

In S26, the processing unit 201 executes area information input reception processing. FIG. 12 is a diagram illustrating a screen example of the display unit 204 at the time of receiving input of area information. In the present embodiment, numerical values in a thick frame 2041 of the screen are generated by the processing unit 201. That is, the processing unit 201 identifies a size of each of the lawn determination area 71, the grass determination area 72, the handheld determination area 73, and the hedge determination area 74 on the basis of the captured image of the image capturing device 3 and the result of the area determination processing of S24. In addition, by image processing of the captured image, an inclination, a waterside, an object to be avoided, a type of a plant, or the like in the work area is identified. In the present embodiment, since the area information is generated on the basis of the captured image of the image capturing device 3, it is possible to reduce the trouble of inputting the information by the user. In the present embodiment, the user may input the number of past works to be referred to.

Since S2 and subsequent steps are similar to those in FIG. 4, description thereof is omitted. In the present embodiment, the server device 1 acquires information based on a captured image of the image capturing device 3 capable of capturing an image of the work area as area information regarding the work area. Therefore, it is possible to reduce the trouble of the user in providing information regarding the past work.

In the present embodiment, the terminal device 2 executes the area determination processing in S24, but the server device 1 may execute the area determination processing. The server device 1 executes the area determination processing, so that it is possible to reduce the processing load on the side of the terminal device 2. In this case, in S22, the captured image of the image capturing device 3 may be transmitted to the server device 1. Then, after executing the area determination processing, the server device 1 may transmit, to the terminal device 2, information necessary for the terminal device 2 to execute the determination result confirmation processing in S25.

<Other Embodiments>

In the above embodiment, the server device 1 functions as an information processing device that identifies the degree of association between the current work area and the past work area and outputs information with the priority according to the degree of association. However, the terminal device 2 may function as such an information processing device. In this case, the terminal device 2 may acquire the information regarding the current work area by receiving the user's input by the input unit 205. Alternatively, the terminal device 2 may acquire information regarding the current work area by receiving the captured image from the image capturing device 3 and performing area determination processing or the like on the image. Further, in such a case, for example, a database for storing history information of past works may be constructed in the storage unit 202 of the terminal device 2. Then, the processing unit 201 may identify the degree of association on the basis of the information of the database stored in the storage unit 202. Further, in the server device 1 of the above embodiment, information is transmitted to the terminal device 2 as output of information with the priority according to the degree of association. On the other hand, in the present embodiment, the processing unit 201 of the terminal device 2 may display information on the display unit 204 as output of information with the priority according to the degree of association.

Further, in the above embodiment, information is output for predicting the work time when the landscaper performs work such as lawn mowing or grass mowing in a park, a garden, or the like, but the configuration of the above embodiment can also be applied to other types of works. For example, the configuration of the above embodiment can also be applied to snow removal work by a snow removal machine, cultivation work by an agricultural machine, ground leveling work by a construction machine, and the like.

<Summary of Embodiments>

The above embodiments disclose at least the following work time prediction device, information processing device, terminal device, information processing method, and program.

1. An information processing device (1, for example) according to the above embodiment comprises

storage means (102, for example) for storing history information in which area information regarding a past work area and time information regarding a work time in the past work area are associated with each other;
acquisition means (101, S3, for example) for acquiring area information regarding a current work area;
identification means (101, S4, for example) for identifying a degree of association between the area information acquired by the acquisition means and the history information stored in the storage means; and
output means (101, S6, for example) for outputting information included in the history information with priority according to the degree of association identified by the identification means.

According to this embodiment, since the information included in the history information is output with the priority according to the degree of association with the area information of the current work area, a user can predict the work time with reference to the history information in the past work area associated with the current work area. Therefore, the prediction accuracy of the work time can be improved.
2. According to the above embodiment,
the area information includes size information regarding a size of the work area and workability information regarding easiness of work in the work area.
According to this embodiment, since the information included in the history information is output in consideration of the workability information, the user can predict the work time in consideration of easiness of work in the work area.
3. According to the above embodiment,

the area information includes division information regarding a division of work,
the size information includes information regarding an area for each division of the work,
the workability information includes information regarding workability for each division of the work, and
the time information includes information regarding a work time for each division of the work.

According to this embodiment, since each piece of information included in the history information is output for each work division, the user can predict the work time for each work division.
4. According to the above embodiment,
the acquisition means acquires information input by a user as the area information.
According to this embodiment, since the information is output by the output means on the basis of the input information of the user, it is possible to output the information necessary for the user to predict the work time with a simple configuration.
5. According to the above embodiment,
the acquisition means acquires, as the area information, information based on a captured image of a device (3, for example) capable of capturing an image of the work area.
According to this embodiment, since the acquisition means acquires the information based on the captured image as the area information, it is possible to reduce the trouble for the user to input the area information.
6. According to the above embodiment,

the area information includes division information regarding a division of work, and
the output means outputs information included in the history information for each division of the work with priority according to the degree of association identified by the identification means.

According to this embodiment, it is possible to output the information included in the history information for each division of the work with the priority according to the degree of association with the area information of the current work area.
7. According to the above embodiment,
the output means outputs information included in predetermined number of pieces of the history information having the high degree of association for each division of the work.
According to this embodiment, the user can compare a plurality of pieces of information included in the history information having a high degree of association with the area information of the current work area for each work division.
8. According to the above embodiment,
the workability information includes information regarding at least one selected from the group consisting of an inclination of the work area, a non-entry region of a working machine in the work area, an object disposed in the work area, and a type of a plant in the work area.

According to this embodiment, the output means can output information more appropriately reflecting the easiness of work.

9. According to the above embodiment,
the size information includes information regarding a surface area of a hedge to be a work target.

According to this embodiment, the output means can output information more appropriately reflecting the work amount.

10. According to the above embodiment,
the division of the work includes at least one selected from the group consisting of lawn work, grass work, manual work, and hedge work.

According to this embodiment, the output means can output more appropriate information according to the work division.

11. A terminal device according to the above embodiment comprises

transmission means (203, S2, for example) for transmitting area information regarding a current work area to the information processing device according to above 1 to 10;
reception means (203, S7, for example) for receiving information output by the output means; and
display means (204, S8, for example) for displaying the information received by the reception means.

According to this embodiment, a terminal device capable of confirming an output result of the information processing device is provided.

12. An information processing method according to the above embodiment is an information processing method of an information processing device including storage means for storing history information in which area information regarding a past work area and time information regarding a work time in the past work area are associated with each other, comprising:

an acquisition step (S3, for example) of acquiring area information regarding a current work area;
an identification step (S4, for example) of identifying a degree of association between the area information acquired by the acquisition step and the history information stored in the storage means; and
an output step (S6, for example) of outputting information included in the history information with priority according to the degree of association identified by the identification step.

According to this embodiment, since the information included in the history information is output with the priority according to the degree of association with the area information of the current work area, a user can predict the work time with reference to the history information in the past work area associated with the current work area. Therefore, the prediction accuracy of the work time can be improved.

13. A program according to the above embodiment causes a computer of an information processing device (1, for example), including storage means (102, for example) for storing history information in which area information regarding a past work area and time information regarding a work time in the past work area are associated with each other, to function as:

acquisition means (S3, for example) for acquiring area information regarding a current work area;
identification means (S4, for example) for identifying a degree of association between the area information acquired by the acquisition means and the history information stored in the storage means; and
output means (S6, for example) for outputting information included in the history information with priority according to the degree of association identified by the identification means.

According to this embodiment, since the information included in the history information is output with the priority according to the degree of association with the area information of the current work area, a user can predict the work time with reference to the history information in the past work area associated with the current work area. Therefore, the prediction accuracy of the work time can be improved.

14. A program according to the above embodiment is a program for causing a computer of a terminal device (2, for example) capable of communicating with a server device (1, for example) to execute an information display method, wherein

the server device (1, for example) includes

storage means (102, for example) for storing history information in which area information regarding a past work area and time information regarding a work time in the past work area are associated with each other,

acquisition means (101, S3, for example) for acquiring area information regarding a current work area, identification means (101, S4, for example) for identifying a degree of association between the area information acquired by the acquisition means and the history information stored in the storage means, and output means (101, S6, for example) for outputting information included in the history information with priority according to the degree of association identified by the identification means, and

the display method includes

a transmission step (S2, for example) of transmitting the area information regarding the current work area to the server device,
a reception step (S7, for example) of receiving information output by the output means, and
a display step (S8, for example) of displaying the information received by the reception step.

According to this embodiment, an output result of the information processing device can be confirmed by the terminal device.

The invention is not limited to the foregoing embodiments, and various variations/changes are possible within the spirit of the invention.

REFERENCE SIGNS LIST

1       Server device
2       Terminal device
101    Processing unit

**Claims**

1.  An information processing device, **characterized by** comprising:

    storage means for storing history information in which area information regarding a past work area and time information regarding a work time in the past work area are associated with each other;
    acquisition means for acquiring area information regarding a current work area;
    identification means for identifying a degree of association between the area information acquired by the acquisition means and the history information stored in the storage means; and
    output means for outputting information included in the history information with priority according to the degree of association identified by the identification means.

2.  The information processing device according to claim 1, **characterized in that**
    the area information includes size information regarding a size of the work area and workability information regarding easiness of work in the work area.

3.  The information processing device according to claim 2, **characterized in that**

    the area information includes division information regarding a division of work,
    the size information includes information regarding an area for each division of the work,
    the workability information includes information regarding workability for each division of the work, and
    the time information includes information regarding a work time for each division of the work.

4.  The information processing device according to any one of claims 1 to 3, **characterized in that**
    the acquisition means acquires information input by a user as the area information.

5.  The information processing device according to any one of claims 1 to 3, **characterized in that**
    the acquisition means acquires, as the area information, information based on a captured image of a device capable of capturing an image of the work area.

6.  The information processing device according to claim 1, **characterized in that**

the area information includes division information regarding a division of work, and
the output means outputs information included in the history information for each division of the work with priority according to the degree of association identified by the identification means.

7. The information processing device according to claim 6, **characterized in that**
the output means outputs information included in predetermined number of pieces of the history information having the high degree of association for each division of the work.

8. The information processing device according to claim 2, **characterized in that**
the workability information includes information regarding at least one selected from the group consisting of an inclination of the work area, a non-entry region of a working machine in the work area, an object disposed in the work area, and a type of a plant in the work area.

9. The information processing device according to claim 2, **characterized in that**
the size information includes information regarding a surface area of a hedge to be a work target.

10. The information processing device according to claim 3 or 7, **characterized in that**
the division of the work includes at least one selected from the group consisting of lawn work, grass work, manual work, and hedge work.

11. A terminal device, **characterized by** comprising:

transmission means for transmitting area information regarding a current work area to the information processing device according to any one of claims 1 to 9;
reception means for receiving information output by the output means; and
display means for displaying the information received by the reception means.

12. An information processing method of an information processing device including storage means for storing history information in which area information regarding a past work area and time information regarding a work time in the past work area are associated with each other, **characterized by** comprising:

an acquisition step of acquiring area information regarding a current work area;
an identification step of identifying a degree of association between the area information acquired by the acquisition step and the history information stored in the storage means; and
an output step of outputting information included in the history information with priority according to the degree of association identified by the identification step.

13. A program for causing a computer of an information processing device, including storage means for storing history information in which area information regarding a past work area and time information regarding a work time in the past work area are associated with each other, to function as:

acquisition means for acquiring area information regarding a current work area;
identification means for identifying a degree of association between the area information acquired by the acquisition means and the history information stored in the storage means; and
output means for outputting information included in the history information with priority according to the degree of association identified by the identification means.

14. A program for causing a computer of a terminal device capable of communicating with a server device to execute an information display method, wherein

the server device includes

storage means for storing history information in which area information regarding a past work area and time information regarding a work time in the past work area are associated with each other,
acquisition means for acquiring area information regarding a current work area,
identification means for identifying a degree of association between the area information acquired by the acquisition means and the history information stored in the storage means, and
output means for outputting information included in the history information with priority according to the degree of association identified by the identification means, and

the display method includes
a transmission step of transmitting the area information regarding the current work area to the server device,
a reception step of receiving information output by the output means, and
a display step of displaying the information received by the reception step.

# F I G. 1

1

SY1

```
┌─────────────────────────────┐
│  ┌───────────────────────┐  │
│  │   PROCESSING UNIT     │──┼─ 101
│  └───────────────────────┘  │
│  ┌───────────────────────┐  │
│  │    STORAGE UNIT       │──┼─ 102
│  └───────────────────────┘  │
│  ┌───────────────────────┐  │
│  │   COMMUNICATION       │──┼─ 103
│  │      UNIT             │  │
│  └───────────────────────┘  │
└─────────────────────────────┘
```

NW

NETWORK

2

```
┌─────────────────────────────┐
│  ┌───────────────────────┐  │
│  │   PROCESSING UNIT     │──┼─ 201
│  └───────────────────────┘  │
│  ┌───────────────────────┐  │
│  │    STORAGE UNIT       │──┼─ 202
│  └───────────────────────┘  │
│  ┌───────────────────────┐  │
│  │   COMMUNICATION       │──┼─ 203
│  │      UNIT             │  │
│  └───────────────────────┘  │
│  ┌───────────────────────┐  │
│  │    DISPLAY UNIT       │──┼─ 204
│  └───────────────────────┘  │
│  ┌───────────────────────┐  │
│  │    INPUT UNIT         │──┼─ 205
│  └───────────────────────┘  │
└─────────────────────────────┘
```

# F I G. 2

# F I G. 3

1021

EP 4 339 854 A1

| AREA ID | DIVISION ID | WORK DIVISION | SIZE (m2) | COEFFICIENTS | | | | | SIZE × COEFFI- CIENT | FUEL CONSUMP- TION AMOUNT (L) | NUMBER OF WORKERS | NUMBER OF WORKING MACHINES | ACTUAL WORK TIME (min) | ACTUAL COST |
|---|---|---|---|---|---|---|---|---|---|---|---|---|---|---|
| | | | | INCLINA- TION | WATER- SIDE | OBJECT | PLANT | TOTAL | | | | | | |
| 0001 | A0001 | LAWN | 500 | 1.2 | 1 | 1.5 | 1 | 1.8 | 900 | 30 | 1 | 1 | 40 | X1 |
| | B0001 | GRASS | 600 | 1.5 | 1.1 | 1 | 1 | 1.65 | 990 | 33 | 2 | 2 | 30 | |
| | C0001 | HANDHELD | 100 | 1 | 1 | 2 | 1 | 2 | 200 | 10 | 1 | 1 | 45 | |
| | D0001 | HEDGE | 150 | 1 | 1 | 1 | 2 | 2 | 300 | 15 | 1 | 1 | 50 | |
| 0002 | A0002 | LAWN | 600 | 1 | 1.2 | 1 | 1 | 1.2 | 720 | 24 | 1 | 1 | 30 | X2 |
| | B0002 | GRASS | 200 | 1.2 | 1 | 1.5 | 1 | 1.8 | 360 | 12 | 2 | 2 | 15 | |
| | C0002 | HANDHELD | 150 | 1 | 1 | 1 | 1.5 | 1.5 | 225 | 13 | 1 | 1 | 45 | |
| | D0002 | HEDGE | 100 | 1 | 1 | 1.2 | 1 | 1.2 | 120 | 6 | 1 | 1 | 20 | |

# F I G.  4

TERMINAL DEVICE

SERVER DEVICE

AREA INFORMATION INPUT RECEPTION PROCESSING — S1

TRANSMIT AREA INFORMATION — S2

RECEPTION PROCESSING (ACQUISITION) — S3

IDENTIFY DEGREE OF ASSOCIATION — S4

IDENTIFY OUTPUT CONTENT — S5

OUTPUT INFORMATION — S6

RECEPTION PROCESSING — S7

DISPLAY PROCESSING — S8

# F I G. 5

204

● PLEASE INPUT INFORMATION OF WORK AREA

| WORK DIVISION | SIZE (m2) | COEFFICIENTS | | | | NUMBER OF WORKERS | NUMBER OF WORKING MACHINES |
|---|---|---|---|---|---|---|---|
| | | INCLINA-TION | WATER-SIDE | OBJECT | PLANT | | |
| LAWN | 450 | 1.3 | 1 | 1.4 | 1 | 1 | 1 |
| GRASS | 200 | 1.2 | 1 | 1.5 | 1 | 2 | 2 |
| HANDHELD | 150 | 1 | 1 | 2 | 1 | 1 | 1 |
| HEDGE | 100 | 1 | 1 | 1 | 1.8 | 1 | 1 |

※ PLEASE INPUT SURFACE AREA FOR SIZE OF HEDGE
※ PLEASE INPUT VALUE FROM 1 TO 2 FOR COEFFICIENTS

● PLEASE INPUT NUMBER OF PAST WORKS TO BE REFERRED TO

| 3 | OBJECTS |
|---|---|

FINISH INPUTTING

# F I G. 6

ASSOCIATED PAST WORK RESULTS ON WORK AREAS

● WORK DIVISION : LAWN

| DEGREE OF ASSOCIA-TION | DIVISION ID | WORK DIVISION | SIZE (m²) | COEFFICIENTS | | | | | SIZE x COEFFI-CIENT | FUEL CONSUMP-TION AMOUNT (L) | NUMBER OF WORKERS | NUMBER OF WORKING MACHINES | ACTUAL WORK TIME (min) |
|---|---|---|---|---|---|---|---|---|---|---|---|---|---|
| | | | | INCLINA-TION | WATER-SIDE | OBJECT | PLANT | TOTAL | | | | | |
| 1 | A0001 | LAWN | 500 | 1.2 | 1 | 1.5 | 1 | 1.8 | 900 | 30 | 1 | 1 | 40 |
| 2 | A0002 | LAWN | 600 | 1 | 1.2 | 1 | 1 | 1.2 | 720 | 24 | 1 | 1 | 30 |
| 3 | A0003 | LAWN | 1000 | 1 | 1.2 | 1 | 1 | 1.2 | 1200 | 40 | 2 | 2 | 25 |

● WORK DIVISION : GRASS

| DEGREE OF ASSOCIA-TION | DIVISION ID | WORK DIVISION | SIZE (m²) | COEFFICIENTS | | | | | SIZE x COEFFI-CIENT | FUEL CONSUMP-TION AMOUNT (L) | NUMBER OF WORKERS | NUMBER OF WORKING MACHINES | ACTUAL WORK TIME (min) |
|---|---|---|---|---|---|---|---|---|---|---|---|---|---|
| | | | | INCLINA-TION | WATER-SIDE | OBJECT | PLANT | TOTAL | | | | | |
| 1 | B0002 | GRASS | 200 | 1.2 | 1 | 1.5 | 1 | 1.8 | 360 | 12 | 2 | 2 | 15 |
| 2 | B0003 | GRASS | 250 | 1.2 | 1.1 | 1.4 | 1 | 1.85 | 460 | 15 | 2 | 2 | 20 |
| 3 | B0001 | GRASS | 600 | 1.5 | 1.1 | 1 | 1 | 1.65 | 990 | 33 | 2 | 2 | 30 |

NEXT PAGE

EP 4 339 854 A1

# F I G. 7

START

SELECT TARGET DIVISION — S401

IDENTIFY DEGREE OF ASSOCIATION OF PAST DATA — S402

S403
IS
THERE DIVISION
FOR WHICH DEGREE OF ASSOCIATION
NOT IDENTIFIED
?
NO

YES

RETURN

# F I G. 8

EP 4 339 854 A1

| DIVISION ID | WORK DIVISION | SIZE (m2) | COEFFICIENTS | | | | | SIZE × COEFFI-CIENT | FUEL CONSUMP-TION AMOUNT (L) | NUMBER OF WORKERS | NUMBER OF WORKING MACHINES | ACTUAL WORK TIME (min) |
| --- | --- | --- | --- | --- | --- | --- | --- | --- | --- | --- | --- | --- |
| | | | INCLINA-TION | WATER-SIDE | OBJECT | PLANT | TOTAL | | | | | |
| A0001 | LAWN | 500 | 1.2 | 1 | 1.5 | 1 | 1.8 | 900 | 30 | 1 | 1 | 40 |
| A0002 | LAWN | 600 | 1 | 1.2 | 1 | 1 | 1.2 | 720 | 24 | 1 | 1 | 30 |
| A0003 | LAWN | 1000 | 1 | 1.2 | 1 | 1 | 1.2 | 1200 | 40 | 2 | 2 | 25 |

# F I G. 9

1

| | |
|---|---|
| PROCESSING UNIT | 101 |
| STORAGE UNIT | 102 |
| COMMUNICATION UNIT | 103 |

NW

NETWORK

3

| | |
|---|---|
| 301 | PROCESSING UNIT |
| 302 | STORAGE UNIT |
| 303 | COMMUNICATION UNIT |
| 304 | IMAGE CAPTURING UNIT |
| 305 | MOVING UNIT |

2

| | |
|---|---|
| PROCESSING UNIT | 201 |
| STORAGE UNIT | 202 |
| COMMUNICATION UNIT | 203 |
| DISPLAY UNIT | 204 |
| INPUT UNIT | 205 |

EP 4 339 854 A1

**F I G. 10**

IMAGE CAPTURING DEVICE

S21 — CAPTURE WORK AREA

S22 — TRANSMIT CAPTURED IMAGE

TERMINAL DEVICE

S23 — RECEPTION PROCESSING
S24 — AREA DETERMINATION PROCESSING
S25 — DETERMINATION RESULT CONFIRMATION PROCESSING
S26 — AREA INFORMATION INPUT RECEPTION PROCESSING

S2 — TRANSMIT AREA INFORMATION

SERVER DEVICE

S3 — RECEPTION PROCESSING (ACQUISITION)
S4 — IDENTIFY DEGREE OF ASSOCIATION
S5 — IDENTIFY OUTPUT CONTENT

S6 — PREDICTION WORK TIME · ESTIMATING TRANSMISSION

S7 — RECEPTION PROCESSING
S8 — DISPLAY PROCESSING

23

# F I G. 11

● PLEASE CONFIRM DETERMINATION RESULT OF WORK DIVISION

CORRECT

FINALIZE

# F I G. 12

204

● PLEASE CONFIRM INFORMATION OF WORK AREA
AND INPUT NUMBER OF WORKERS

| WORK DIVISION | SIZE (m2) | COEFFICIENTS | | | | NUMBER OF WORKERS |
| --- | --- | --- | --- | --- | --- | --- |
| | | INCLINA-TION | WATER-SIDE | OBJECT | PLANT | |
| LAWN | 450 | 1.3 | 1 | 1.4 | 1 | 1 |
| GRASS | 200 | 1.2 | 1 | 1.5 | 1 | 2 |
| HANDHELD | 150 | 1 | 1 | 2 | 1 | 1 |
| HEDGE | 100 | 1 | 1 | 1 | 1.8 | 1 |

2041

● PLEASE INPUT NUMBER OF PAST WORKS TO BE REFERRED TO

| 3 | OBJECTS |
| --- | --- |

FINISH INPUTTING

# EP 4 339 854 A1

| | | |
|---|---|---|
| **INTERNATIONAL SEARCH REPORT** | International application No. | |
| | PCT/JP2021/022667 | |

| | |
|---|---|
| A. CLASSIFICATION OF SUBJECT MATTER<br>G06Q 10/06(2012.01)i; G06Q 50/02(2012.01)i<br>FI: G06Q10/06 302; G06Q50/02 | |
| According to International Patent Classification (IPC) or to both national classification and IPC | |

| B. FIELDS SEARCHED |
|---|
| Minimum documentation searched (classification system followed by classification symbols)<br>G06Q10/06; G06Q50/02 |

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2020-119166 A (HITACHI LTD) 06 August 2020 (2020-08-06) entire text, all drawings | 1-14 |
| A | WO 2020/136811 A1 (HONDA MOTOR CO LTD) 02 July 2020 (2020-07-02) entire text, all drawings | 1-14 |
| A | WO 2020/136812 A1 (HONDA MOTOR CO LTD) 02 July 2020 (2020-07-02) entire text, all drawings | 1-14 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 03 September 2021 (03.09.2021) | 14 September 2021 (14.09.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| Patent Documents referred in the Report | Publication Date | Patent Family | Publication Date |
|---|---|---|---|
| JP 2020-119166 A | 06 Aug. 2020 | US 2020/0234219 A1 entire text, all drawings | |
| WO 2020/136811 A1 | 02 Jul. 2020 | (Family: none) | |
| WO 2020/136812 A1 | 02 Jul. 2020 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009118823 A